# EUROPEAN PATENT SPECIFICATION

(11) **EP 2 405 108 B1**
(45) Date of publication and mention of the grant of the patent: **15.07.2015**
(21) Application number: 10191005.7
(22) Date of filing: 12.11.2010
(51) Int. Cl.: F01N 3/08, F01N 11/00, F01N 3/021

(54) **Exhaust gas post processing system and control method thereof**
Abgasnachbearbeitungssystem und Steuerverfahren dafür
Système de traitement post gaz d'échappement et procédé de contrôle correspondant

(30) Priority: 08.07.2010 KR 20100065899
(43) Date of publication of application: 11.01.2012
(73) Proprietor: Hyundai Motor Company, Seoul (KR); Kia Motors Corporation, Seoul (KR)
(72) Inventor: Lee, Jin Ha, Seoul (KR)
(74) Representative: Viering, Jentschura & Partner Patent- und Rechtsanwälte

(56) References cited:
- EP-A1- 2 151 555
- EP-A2- 1 515 016
- DE-A1- 10 146 372
- US-A1- 2007 065 341

## Description

### BACKGROUND OF THE INVENTION

### Field of the Invention

The present invention relates to an exhaust gas processing system that is provided with a nitrogen oxide purification catalyst for eliminating nitrogen oxide of the exhaust gas and the control method thereof.

### Description of the Related Art

In a system using diesel fuel, a main object of exhaust gas processing is reducing particulate matters and eliminating nitrogen oxide.

A diesel particulate filter (DPF) is applied so as to reduce the particulate matters, and a nitrogen oxide purification catalyst (LNT) is applied so as to reduce the nitrogen oxide.

The diesel particulate filter and the nitrogen oxide purification catalyst are polluted by sulfur (S) included in the exhaust gas, there is therefore a problem that the performance thereof is deteriorated, and a secondary injection system is used to desulfurize the filter by raising the temperature of the filter.

Meanwhile, in a case that high sulfur fuel is refueled, the diesel particulate filter or the nitrogen oxide purification catalyst is frequently regenerated such that the durability thereof is decreased, or there is a problem that fuel consumption is increased by a frequent desulfurization.

The above information is only for enhancement of understanding of the general background of the invention and should not be taken as an acknowledgement or any form of suggestion that this information forms the prior art already known to a person skilled in the art.

DE 101 46 372 A1 discloses a device for determining deterioration of a catalyst, EP 2 151 555 A1 discloses a catalyst deterioration determination device and method, and US 2007/0065341 A1 discloses an exhaust gas control apparatus and exhaust gas control method for an internal combustion engine.

### SUMMARY OF THE INVENTION

The present invention has been made in an effort to provide an exhaust gas processing method having advantages of improving durability of a catalyst such as a diesel particulate filter or a nitrogen oxide purification catalyst that is disposed on an exhaust line to be desulfurized and notifying that a high sulfur fuel is replenished so as to reduce fuel consumption.

To this end, the present invention provides an exhaust gas processing method according to claim 1. Further, the present invention provides an exhaust gas processing system as defined in claim 2. An exemplary embodiment of the exhaust gas processing system is described in claim 3.

In exhaust gas processing methods according to the present invention, while the nitrogen oxide purification mode is being performed so as to eliminate the nitrogen oxide, the desulfurization control is performed according to a temperature difference between the front and the rear of the catalyst, and if the abnormal desulfurization control is repeatedly performed, it is determined that the high sulfur fuel is replenished.

Accordingly, the methods of the present invention may have the vehicle driver effectively determine whether the high sulfur fuel is replenished or not and guide the vehicle driver not to replenish the high sulfur fuel some other time.

The methods and apparatuses of the present invention have other features and advantages which will be apparent from or are set forth in more detail in the accompanying drawings, which are incorporated herein, and the following Detailed Description of the Invention, which together serve to explain certain principles of the present invention.

### BRIEF DESCRIPTION OF THE DRAWINGS

FIG 1 is a schematic diagram of an exemplary exhaust gas processing system according to the present invention.

FIG 2 is a graph showing an exemplary catalyst front/rear temperature difference and reducing agent injection amount in an exhaust gas processing system according to the present invention.

FIG 3 is a flowchart showing an exemplary exhaust gas processing method according to the present invention.

### DETAILED DESCRIPTION OF THE EMBODIMENTS

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the scope of the invention as defined by the appended claims.

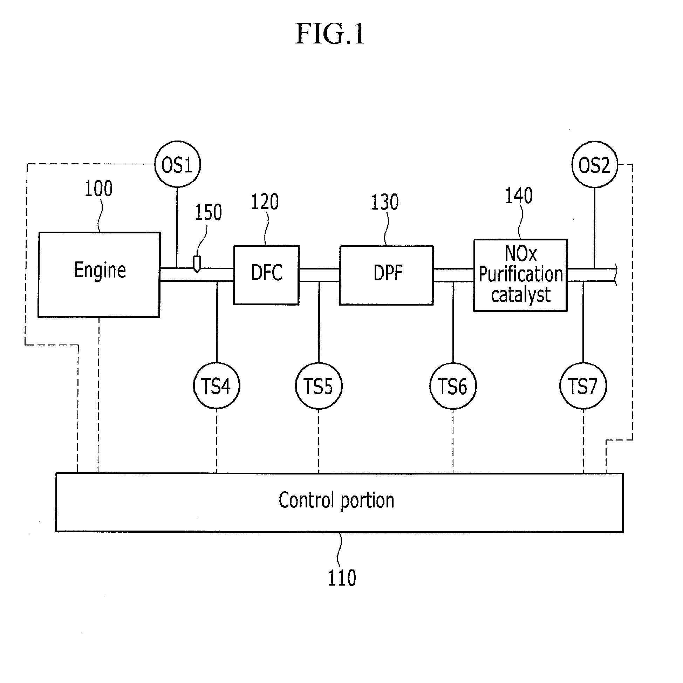

Referring to FIG 1, an exhaust gas processing system includes an engine 100, an injector 150, a diesel fuel cracker 120, a diesel particulate filter 130, a nitrogen oxide purification catalyst 140, a first oxygen sensor OS1, a second oxygen sensor OS2, a fourth temperature sensor TS4, a fifth temperature sensor TS5, a sixth temperature sensor TS6, a seventh temperature sensor TS7, and a control portion 110.

The diesel fuel cracker (120, DFC), the diesel particulate filter (130, DPF), and the nitrogen oxide purification catalyst 140 are sequentially disposed on the exhaust line, the injector 150 is disposed at an upstream side of the diesel fuel cracker 120, and the first oxygen sensor OS1 is disposed at an upstream side of the injector 150. Further, the second oxygen sensor OS2 is disposed at a downstream side of the nitrogen oxide purification catalyst 140.

The fourth temperature sensor TS4 is disposed between the injector 150 and the diesel fuel cracker 120, and the fifth temperature sensor TS5 is disposed between the diesel fuel cracker 120 and the diesel particulate filter 130.

The sixth temperature sensor TS6 is disposed between the diesel particulate filter 130 and the nitrogen oxide purification catalyst 140, and the seventh temperature sensor TS7 is disposed between the nitrogen oxide purification catalyst 140 and the second oxygen sensor OS2.

The control portion 110 is electrically connected to a detecting portion including the first oxygen sensor OS1, the injector 150, the fourth temperature sensor TS4, the fifth temperature sensor TS5, the sixth temperature sensor TS6, the seventh temperature sensor TS7, and the second oxygen sensor OS2, and receives signals detected by the detecting portion.

The control portion 110 determines timing for regenerating the diesel fuel cracker 120, the diesel particulate filter 130, or the nitrogen oxide purification catalyst 140 and controls the injector 150 to inject reducing agent.

The first oxygen sensor OS1 and the second oxygen sensor OS2 detects oxygen concentration of the exhaust gas and the control portion 110 determines a condition of the exhaust gas based on the detected signal.

The fourth temperature sensor TS4 detects temperature of a front portion exhaust gas of the diesel fuel cracker 120, and the fifth temperature sensor TS5 detects temperature of a rear portion exhaust gas of the diesel fuel cracker 120 and a front portion of the diesel particulate filter 130.

The sixth temperature sensor TS6 detects temperature of a rear portion exhaust gas of the diesel particulate filter 130 and a front portion exhaust gas of the nitrogen oxide purification catalyst 140, and the seventh temperature sensor TS7 detects temperature of a rear portion exhaust gas of the nitrogen oxide purification catalyst 140.

While reducing agent is being injected by the injector 150, the control portion 110 detects front/rear temperature difference of the diesel fuel cracker 120, front/rear temperature difference of the diesel particulate filter 130, and front/rear temperature difference of the nitrogen oxide purification catalyst 140 through the temperature sensors (TS4, TS5, TS6, TS7).

The control portion 110 detects concentration of injected reducing agent from oxygen concentration detected by the first oxygen sensor OS1 and the second oxygen sensor OS2 and controls the injection amount of the reducing agent.

The control portion 110 may be realized as at least one of microprocessor operated by a predetermined program and the predetermined program can be programmed to include a set of instructions to perform steps in a method according to various embodiments of the present invention, which will be later described in more detail.

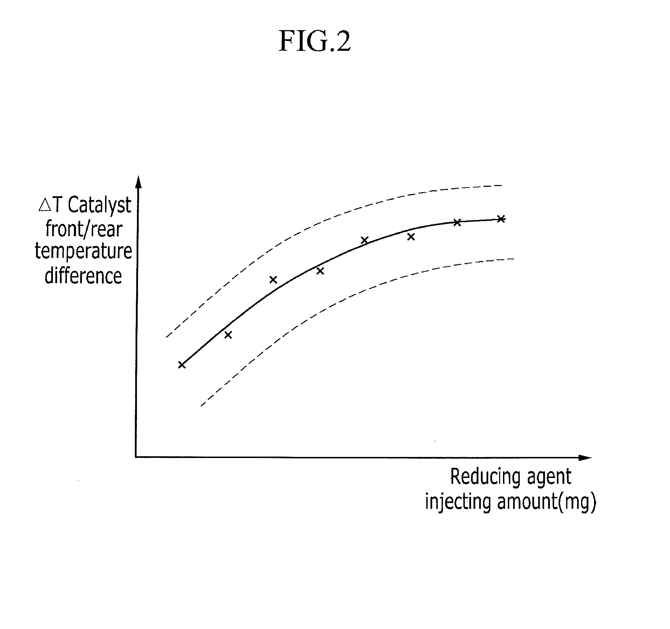

Referring to FIG 2, a horizontal axis denotes reducing agent amount injected by the injector 150 and a vertical axis denotes front/rear temperature difference. A catalyst can be the diesel fuel cracker 120, the diesel particulate filter 130, or the nitrogen oxide purification catalyst 140 in various embodiments of the present invention.

The front/rear temperature difference forms a regular pattern according to the reducing agent amount injected by the injector 150 and this data is stored in a predetermined memory in advance. Meanwhile, if the catalyst does not normally perform due to the degradation thereof, the front/rear temperature difference is decreased.

A cause for decreasing the temperature difference may be divided into a normal case and an abnormal case. The normal case includes a condition that the travel distance, the fuel consumption amount, or the travel time exceeds a predetermined value such that the sulfur is accumulated in the catalyst and the abnormal case includes a condition that the temperature sensor (TS4, TS5, TS6, TS7), or the injector 150 is abnormally operated or is down.

Particularly, in a case that the sulfur of high concentration is included in the diesel fuel, the catalyst is rapidly poisoned by the sulfur, the catalyst may be not normally operated while the reducing agent is being injected and the front/rear temperature difference is decreased due to the deterioration of the catalyst.

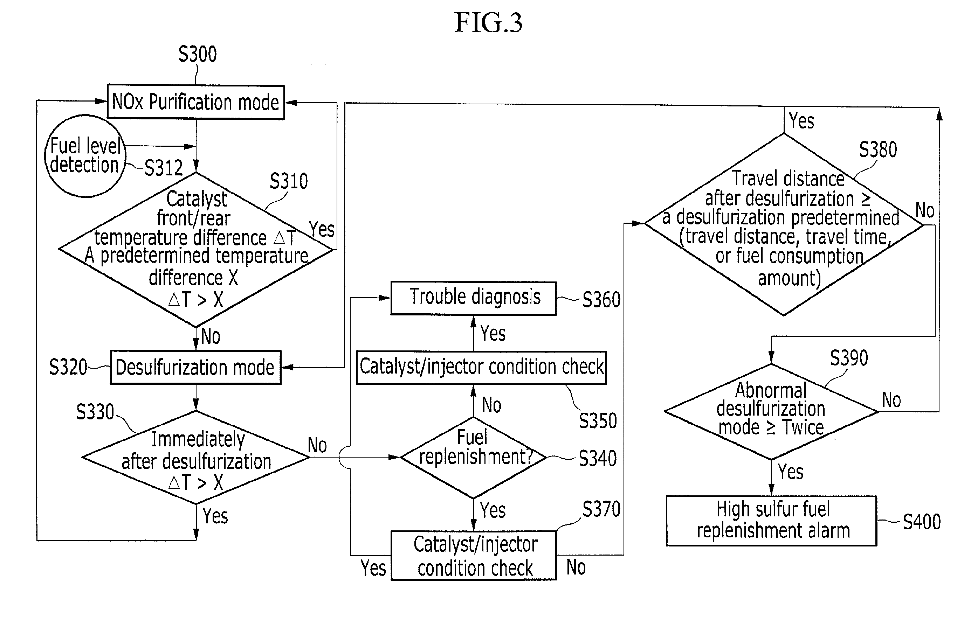

Referring to FIG 3, a nitrogen oxide purification mode is performed so as to eliminate nitrogen oxide through the nitrogen oxide purification catalyst 140 in a S300. The fuel as reducing agent is injected by the injector 150 in the nitrogen oxide purification mode and the injected reducing agent reacts with the diesel fuel cracker 120 to be activated.

Further, the activated reducing agent reacts with the nitrogen oxide purification catalyst 140 to eliminate the nitrogen oxide trapped in the nitrogen oxide purification catalyst 140.

The fuel level stored in the fuel tank is detected in a S312, it is determined whether the front/rear temperature difference (ΔT) is larger than a predetermined value (X) in a S310, if the front/rear temperature difference (ΔT) is larger than the predetermined value (X), the nitrogen oxide purification mode is normally operated, and if the temperature difference (ΔT) is less than the predetermined value (X), it is returned to a S320.

A desulfurization mode is performed in the S320 to have the injector 150 inject more reducing agent so as to raise the temperature of the catalyst.

It is determined whether the front/rear temperature difference (ΔT) exceeds a predetermined value (X) After the desulfurization mode in a S330, if the front/rear temperature difference (ΔT) is larger than the predetermined value (X), the S300 is performed, and if the front/rear temperature difference (ΔT) is less than the predetermined value (X), the S340 is performed.

It is determined whether the fuel is replenished or not in the S340. The control portion 110 detects fuel amount from a fuel gauge and determines whether the fuel is replenished of not.

If the fuel is not replenished, a S350 is performed, it is determined whether the catalyst of the injector 150 is being normally operated, and the trouble diagnosis is performed in a S360. A method for determining whether the catalyst or the injector 150 is being normally operated is omitted in various embodiments of the present invention.

If the fuel is replenished, condition of the catalyst or the injector 150 is checked in a S270 and a S380 is performed.

It is determined whether the mileage (travel distance) after the desulfurization is larger than a predetermined desulfurization distance in the S380. It may be determined whether the travel time after the desulfurization is larger than a predetermined desulfurization time in the S380 of various embodiments of the present invention.

It may be determined whether the fuel consumption amount after the desulfurization instead of the travel distance (mileage) is larger than a predetermined desulfurization fuel consumption amount in the S380 of various embodiments of the present invention. In other words, it may be determined whether the mileage, the travel time, or the fuel consumption amount accumulated after the desulfurization is larger than a predetermined value in the S380.

If the mileage, the travel time, or the fuel consumption amount after the desulfurization is larger than the predetermined value in the S380, the S320 is performed, and if the mileage, the travel time, or the fuel consumption amount after the desulfurization is less than the predetermined value, the S390 is performed.

After the desulfurization, the travel distance, the travel time, or the fuel consumption is less than the predetermined value, but as determined in the S330, because the front/rear temperature difference (ΔT) is less than the predetermined value (X), the S320 is performed so as to abnormally desulfurize the catalyst, and the number of times of the abnormal desulfurization is counted in a S390.

The number of times of the abnormal desulfurization is counted in the S390, if the number of times is 2, it is determined that the high sulfur fuel is replenished in a S400 and it is notified to a driver.

As described above, while a nitrogen oxide purification mode is being performed to eliminate the nitrogen oxide, the desulfurization is performed according to the front/rear temperature difference of the catalyst, in a case that the abnormal desulfurization control is repeatedly performed, it is determined that the high sulfur fuel is replenished.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. An exhaust gas processing method, comprising:
desulfurizing a catalyst by raising temperature of the catalyst to a predetermined value (S320), if a front/end temperature difference ΔT is less than a predetermined temperature difference X (S310), while a reducing agent is being injected;
determining whether immediately after desulfurization the front/end temperature difference ΔT is above the predetermined temperature difference X (S330);
if the front/end temperature difference ΔT is not above the predetermined temperature difference X, determining whether fuel is replenished by detecting the fuel amount (S340);
if fuel is replenished, determining whether a travel distance, a fuel consumption amount, or a travel time exceeds a first reference value, after the desulfurization (S380);
if the travel distance, fuel consumption amount, or travel time does not exceed the first reference value, desulfurizing the catalyst irregularly;
counting the number of times of the irregular desulfurization (S390); and
giving alarm that the high sulfur fuel is replenished (S400), if the counting number is larger than a predetermined value.

2. An exhaust gas processing system, comprising:
a catalyst eliminating particulate matter of exhaust gas;
a detecting portion detecting driving condition of a vehicle, and
a control portion (110) performing a predetermined program for regenerating the catalyst according to the driving condition detected by the detecting portion,
wherein the predetermined program includes an instruction for performing the method of claim 1.

3. The exhaust gas processing system of claim 2, wherein the catalyst is
an oxidation catalyst eliminating harmful material,
a diesel particulate filter (130) trapping particulate matter of exhaust gas, or
a nitrogen oxide purification catalyst (140) eliminating nitrogen oxide of exhaust gas.

## Patentansprüche

1. Ein Abgasbehandlungsverfahren, aufweisend:
Entschwefeln eines Katalysators durch Erhöhen einer Temperatur des Katalysators auf einen vorgegebenen Wert (S320), wenn eine Vorderseiten/Rückseiten-Temperaturdifferenz ΔT kleiner als eine vorgegebene Temperaturdifferenz X ist (S310), während ein Reduktionsmittel eingespritzt wird;
Ermitteln, ob sofort nach dem Entschwefeln die Vorderseiten/Rückseiten-Temperaturdifferenz ΔT über der vorgegebenen Temperaturdifferenz X ist (S330);
Ermitteln, ob Kraftstoff nachgefüllt ist, durch Detektieren der Kraftstoffmenge (S340), wenn die Vorderseiten/Rückseiten-Temperaturdifferenz ΔT nicht über der vorgegebenen Temperaturdifferenz X ist,
Ermitteln, ob eine Fahrstrecke, eine Kraftstoffverbrauchsmenge oder eine Fahrzeit nach dem Entschwefeln einen ersten Referenzwert überschreitet (S380), wenn Kraftstoff nachgefüllt ist;
irreguläres Entschwefeln des Katalysators, wenn die Fahrstrecke, Kraftstoffverbrauchsmenge oder Fahrzeit den ersten Referenzwert nicht überschreitet;
Zählen der Anzahl der irregulären Entschwefelungen (S390); und
Alarm geben, dass Kraftstoff mit hohem Schwefelgehalt nachgefüllt ist (S400), wenn die Zählanzahl größer als ein vorgegebener Wert ist.

2. Ein Abgasbehandlungssystem, aufweisend:
einen Katalysator, welcher Partikelmaterial aus Abgas eliminiert;
einen Detektierabschnitt, welcher einen Fahrzustand eines Fahrzeugs detektiert; und
einen Steuerungsabschnitt (110), welcher ein vorgegebenes Programm zum Regenerieren des Katalysators gemäß dem Fahrzustand, welcher durch den Detektierabschnitt detektiert wurde, ausführt,
wobei das vorgegebene Programm eine Anweisung zum Ausführen des Verfahrens nach Anspruch 1 enthält.

3. Das Abgasbehandlungssystem nach Anspruch 2, wobei der Katalysator
ein Oxidationskatalysator, welcher schädliches Material entfernt,
ein Dieselpartikelfilter (130), welcher Partikelmaterial aus Abgas fängt, oder
ein Stickstoffoxid-Reinigungskatalysator (140), welcher Stickstoffoxid aus Abgas entfernt,
ist.

## Revendications

1. Procédé de traitement des gaz d'échappement, comprenant les étapes consistant à :
désulfurer un catalyseur en élevant la température du catalyseur à une valeur prédéterminée (S320), si une différence de température avant/arrière ΔT est inférieure à une différence de température prédéterminée X (S310), tandis qu'un agent réducteur est injecté ;
déterminer si, immédiatement après la désulfuration, la différence de température avant/arrière ΔT se situe au-dessus de la différence de température prédéterminée X (S330) ;
si la différence de température avant/arrière ΔT ne se situe pas au-dessus de la différence de température prédéterminée X, déterminer si le plein en carburant a été refait en détectant la quantité de carburant (S340) ;
si le plein de carburant a été refait, déterminer si une distance de déplacement, une quantité de consommation de carburant, ou un temps de déplacement dépasse une première valeur de référence, après la désulfuration (S380) ;
si la distance de déplacement, la quantité de consommation de carburant, ou le temps de déplacement ne dépasse pas la première valeur de référence, désulfurer le catalyseur de manière irrégulière ;
compter le nombre de désulfurations irrégulières (S390) ; et
déclencher une alarme selon laquelle un plein en carburant à haute teneur en soufre a été refait (S400), si le nombre de désulfurations irrégulières est supérieur à une valeur prédéterminée.

2. Système de traitement des gaz d'échappement, comprenant :
un catalyseur qui élimine les matières particulaires des gaz d'échappement ;
une partie détection qui détecte l'état de conduite d'un véhicule ; et
une partie commande (110) qui exécute un programme prédéterminé destiné à régénérer le catalyseur selon l'état de conduite détecté par la partie détection ;
dans lequel le programme prédéterminé comprend des instructions destinées à exécuter le procédé selon la revendication 1.

3. Système de traitement des gaz d'échappement selon la revendication 2, dans lequel le catalyseur est :
un catalyseur d'oxydation qui élimine les matières nuisibles ;
un filtre de particules diesel (130) qui piège les matières particulaires des gaz d'échappement ; ou
un catalyseur d'épuration d'oxyde d'azote (140) qui élimine l'oxyde d'azote des gaz d'échappement.
